# EUROPÄISCHE PATENTANMELDUNG

(11) **EP 3 996 248 A1**
(43) Veröffentlichungstag der Anmeldung: **11.05.2022**
(21) Anmeldenummer: 21206767.2
(22) Anmeldetag: 05.11.2021
(51) Int. Cl.: H02K 1/22, H02K 1/276, H02K 15/02, H02K 15/12, H02K 15/03, H02K 1/28

(54) **ROTOR FÜR EINE ELEKTRISCHE MASCHINE MIT VERBESSERTER AXIALER SICHERUNG EINES ROTORBLECHPAKETS**

(30) Priorität: 09.11.2020 DE 102020214046
(71) Anmelder: Valeo Siemens eAutomotive Germany GmbH, 91056 Erlangen (DE)
(72) Erfinder: Kessler, Bernhard, 97616 Bad Neustadt a.d.Saale (DE); Englert, Christoph, 97616 Bad Neustadt a.d.Saale (DE); Rubi, Markus, 97616 Bad Neustadt a.d.Saale (DE); Schlereth, Alexander, 97616 Bad Neustadt a.d.Saale (DE)

(57) **Zusammenfassung**

Es wird ein Rotor (2, 2a, 2b) für eine elektrische Maschine (1) angegeben, welcher eine Rotorwelle (3) umfasst, ein Rotorblechpaket (4), das mit einer Presspassung auf der Rotorwelle (3) sitzt, einen ersten Rotorhalter (6, 6a, 6b), welcher benachbart zum Rotorblechpaket (4) auf einer ersten Seite desselben mit Hilfe einer Presspassung auf der Rotorwelle (3) montiert ist, und/oder einen zweiten Rotorhalter (7, 7a, 7b), welcher benachbart zum Rotorblechpaket (4) auf einer zweiten, gegenüberliegenden Seite desselben mit Hilfe einer Presspassung auf der Rotorwelle (3) montiert ist. Zudem werden eine elektrische Maschine (1) mit einem solchen Rotor (2, 2a, 2b) und ein Fahrzeug (22) mit einer solchen elektrischen Maschine (1) angegeben.

## Beschreibung

### TECHNISCHES GEBIET

Die Erfindung betrifft einen Rotor einer elektrischen Maschine, eine elektrische Maschine mit einem solchen Rotor und ein Fahrzeug mit einer solchen elektrischen Maschine.

### STAND DER TECHNIK

Bei der Montage des Rotorblechpakets auf der Rotorwelle werden die Rotorbleche mit einer Pressvorrichtung aufeinandergedrückt, sodass zwischen den Rotorblechen nach Möglichkeit keine oder nur kleine Luftspalte entstehen. Aufgrund unweigerlicher Abweichungen von der Ebenenform wirken die Rotorbleche als Federpaket. Im Betrieb der elektrischen Maschine kann es im Laufe der Zeit zu einem unerwünschten Auffächern des Rotorblechpakets beziehungsweise zu einem unerwünschten Auseinanderwandern der Rotorbleche kommen.

### OFFENBARUNG DER ERFINDUNG

Eine Aufgabe der Erfindung ist es daher, einen verbesserten elektrischen Rotor einer elektrischen Maschine, eine verbesserte elektrische Maschine sowie ein verbessertes Fahrzeug anzugeben. Insbesondere soll ein (speziell im Betrieb der elektrischen Maschine auftretendes) Auffächern des Rotorblechpakets beziehungsweise Auseinanderwandern der Rotorbleche wirkungsvoll verhindert werden.

Die Aufgabe der Erfindung wird mit einem Rotor für eine elektrische Maschine gelöst, welcher eine Rotorwelle umfasst, ein Rotorblechpaket, das mit einer Presspassung auf der Rotorwelle sitzt, und einen ersten Rotorhalter, welcher benachbart zum Rotorblechpaket auf einer ersten Seite desselben angeordnet ist, und einen zweiten Rotorhalter, welcher benachbart zum Rotorblechpaket auf einer zweiten, gegenüberliegenden Seite desselben angeordnet ist. Der erste Rotorhalter und/oder der zweiten Rotorhalter ist/sind dabei mit Hilfe einer Presspassung auf der Rotorwelle montiert.

Insbesondere kann vorgesehen sein, dass die Presspassung die alleinige axiale Sicherung des ersten Rotorhalters und/oder des zweiten Rotorhalters ist.

Weiterhin wird die Aufgabe der Erfindung mit einem Verfahren zur Herstellung eines Rotors für eine elektrische Maschine gelöst, das folgende Schritte aufweist:
a) Bereitstellen einer Rotorwelle,
b) Aufpressen eines Rotorblechpakets auf die Rotorwelle,
c1) Aufpressen eines ersten Rotorhalters auf die Rotorwelle benachbart zum Rotorblechpaket auf einer ersten Seite desselben und/oder
c2) Aufpressen eines zweiten Rotorhalters auf die Rotorwelle benachbart zum Rotorblechpaket auf einer zweiten, gegenüberliegenden Seite desselben.

Aufgrund des Aufpressens des Rotorblechpakets auf die Rotorwelle entsteht ein Längspressverband.

Vorzugsweise werden der erste Rotorhalter, der zweite Rotorhalter und das Rotorblechpaket gemeinsam auf die Rotorwelle aufgepresst, wodurch insbesondere ein Längspressverband aus der Rotorwelle, dem Rotorblechpaket, des ersten Rotorhalters und des zweiten Rotorhalters entsteht.

Insbesondere kann dabei vorgesehen sein, dass der erste Rotorhalter und/oder der zweite Rotorhalter beim Aufpressen, also unter Krafteinwirkung, auf die Rotorwelle erhitzt wird, um ein Aufpressen zu erleichtern.

Ein Aspekt der Erfindung betrifft ein Verfahren zur Herstellung eines Rotors für eine elektrische Maschine gelöst, aufweisend folgende Verfahrensschritte:
- Bereitstellen einer Rotorwelle und eines Rotorblechpakets,
- Ausrichten eines ersten Rotorhalters und eines zweiten Rotorhalters relativ zum Rotorblechpaket, sodass der erste Rotorhalter an einem Ende des Rotorblechpakets und der zweite Rotorhalter an einem anderen Ende anliegt,
- Verspannung des ersten und zweiten Rotorhalters mit dem Rotorblechpaket, um einen verspannten Verbund aus dem ersten Rotorhalter, dem zweiten Rotorhalter und dem Rotorblechpaket zu erhalten,
- Erhitzen des verspannten Verbundes und kraftloses Einfügen der Rotorwelle in den erhitzten verspannten Verbund, und
- Abkühlen lassen des erhitzten verspannten Verbundes mit darin eingefügter Rotorwelle, um den Rotor zu erhalten.

Ein Aspekt der Erfindung betrifft ein Verfahren zur Herstellung eines Rotors für eine elektrische Maschine gelöst, aufweisend folgende Verfahrensschritte:
- Bereitstellen einer gekühlten Rotorwelle und eines Rotorblechpakets,
- Ausrichten eines ersten Rotorhalters und eines zweiten Rotorhalters relativ zum Rotorblechpakets, sodass der erste Rotorhalter an einem Ende des Rotorblechpakets und der zweite Rotorhalter an einem anderen Ende des Rotorblechpaktes anliegt,
- Verspannung des ersten und zweiten Rotorhalters mit dem Rotorblechpaket, um einen verspannten Verbund aus dem ersten Rotorhalter, dem zweiten Rotorhalter und dem Rotorblechpaket zu erhalten,
- Abkühlen der Rotorwelle, und
- kraftloses Einfügen der Rotorwelle in den verspannten Verbund, und
- Erwärmen des verspannten Verbundes mit darin eingefügter Rotorwelle, um den Rotor zu erhalten.

Das Verspannen des ersten und zweiten Rotorhalters mit dem Rotorblechpaket kann mittels eines Werkstückträgers erfolgen. Ggf. wird der verspannte Verbund mit dem Werkstückträger erhitzt und die Rotorwelle kraftlos in den im Werkstückträger angeordneten Verbundes erhitzt und anschließend mit darin eingefügter Rotorwelle abgekühlt.

Insbesondere entsteht durch das kraftlose Einfügen der Rotorwelle in den verspannten Verbund bzw. in den erhitzten verspannten Verbund ein sogenannter Querpressverband.

Darüber hinaus wird die Aufgabe der Erfindung mit einer elektrischen Maschine gelöst, welche einen Stator umfasst, sowie einen Rotor der oben genannten Art, der gegenüber dem Stator um die Rotationsachse des Rotors drehbar gelagert ist.

Schließlich wird die Aufgabe auch durch ein Fahrzeug mit wenigstens zwei Achsen gelöst, von denen wenigstens eine angetrieben ist, wobei der besagte Antrieb zumindest teilweise oder zeitweise durch die oben genannte elektrische Maschine erfolgt.

Durch das Vorsehen einer Presspassung für einen Rotorhalter können zusätzliche Mittel, welche die axiale Position des ersten Rotorhalters und/oder des zweiten Rotorhalters sichern würden, entfallen. Das heißt, Wellensicherungsringe, Wellenmuttern oder dergleichen können weggelassen werden. Dadurch kann axialer Bauraum eingespart werden, wodurch die elektrische Maschine sehr kurz baut. Dennoch wird einem unerwünschten Auffächern des Rotorblechpakets beziehungsweise zu einem unerwünschten Auseinanderwandern der Rotorbleche wirksam vorgebeugt, da die Rotorhalter die Rotorbleche auch im Betrieb der elektrischen Maschine verlässlich in Position halten.

An dieser Stelle wird angemerkt, dass es zwar von Vorteil ist, wenn beide Rotorhalter mit Hilfe einer Presspassung auf der Rotorwelle montiert sind, es aber auch möglich ist, dass einer der beiden Rotorhalter axial anders gesichert ist, beispielsweise durch eine Wellenschulter auf der Rotorwelle oder einen Wellensicherungsring.

Ein Rotorhalter ist insbesondere dadurch gekennzeichnet, dass er wenigstens dreimal so dick ist wie ein Rotorblech. Das heißt, ein Rotorhalter ist wesentlich stabiler als ein Rotorblech.

Vorteilhaft ist es, wenn der erste Rotorhalter und/oder der zweite Rotorhalter aus einem (ferromagnetischen) Vergütungsstahl gefertigt ist. Diese Stähle sind hochfest und eignen sich daher besonders gut für die Lösung der gestellten Aufgabe. Beispiele für hochfesten Stahl sind 42 CroMo4 sowie Federstahl C67.

Besonders vorteilhaft ist es auch, wenn der Minimumabstand zwischen dem ersten Rotorhalter und im Rotorblechpaket angeordneten Permanentmagneten und/oder der Minimumabstand zwischen dem zweiten Rotorhalter und im Rotorblechpaket angeordneten Permanentmagneten (in einer Stirnebene des Rotorblechpakets normal auf eine Rotationsachse des Rotors) 4 mm beträgt. Dadurch ist der erste Rotorhalter und/oder der zweite Rotorhalter ausreichend außerhalb des im Rotorblechpaket gebildeten magnetischen Kreises angeordnet, sodass negative Auswirkungen auf denselben selbst bei Verwendung eines ferromagnetischen Vergütungsstahls für die Rotorhalter gering bleibt. Mit anderen Worten kann aufgrund des vorgeschlagenen Minimumabstands hochfester Stahl für die Rotorhalter verwendet werden, ohne dass gravierende negative Auswirkungen auf den magnetischen Kreis zu erwarten wären.

Generell kann die Außenkontur des ersten Rotorhalters und/oder des zweiten Rotorhalters beispielsweise
i) kreiszylindrisch sein oder
ii) sternförmig, wobei der erste Rotorhalter und/oder der zweite Rotorhalter so viele Arme hat wie der Rotor magnetische Pole und die Arme des ersten Rotorhalters und/oder des zweiten Rotorhalters zwischen den magnetischen Polen angeordnet sind.

Die Ausführungsform i) bietet den Vorteil, dass diese besonders einfach hergestellt werden kann, die Ausführungsform ii) bietet dagegen den Vorteil, dass das Rotorblechpaket durch die Arme auch radial weit außen gut zusammengehalten wird. Dadurch, dass die Arme des ersten Rotorhalters und/oder des zweiten Rotorhalters zwischen den magnetischen Polen angeordnet sind, wird der im Rotorblechpaket gebildete magnetische Kreis durch die Rotorhalter nicht oder nur geringfügig beeinflusst.

Günstig ist es weiterhin, wenn im Rotorblechpaket angeordnete Bohrungen, von denen einige mit Wuchtgewichten besetzt sind, im ersten Rotorhalter und/oder im zweiten Rotorhalter freigelassen beziehungsweise freigestellt sind. Auf diese Weise kann der Rotor auch im montierten Zustand der Rotorhalter durch selektives Einsetzen von Wuchtgewichten in die dafür vorgesehenen Bohrungen gewuchtet werden.

Günstig ist es weiterhin, wenn der erste Rotorhalter und/oder der zweiten Rotorhalter im Bereich eines Verbindungsmittels zur Ausrichtung und/oder Verbindung von Rotorblechen des Rotorblechpaktes freigestellt ist. Beispielsweise können Laschen der Rotorbleche jeweils etwas umgebogen werden, um die Rotorbleche zu verbinden und auszurichten. Auch durch das Rotorblechpaket verlaufende Stifte sind Beispiele für Verbindungsmittel zur Ausrichtung und/oder Verbindung der Rotorbleche des Rotorblechpakets. Durch die Freistellungen wird vermieden, dass die Rotorhalter im montierten Zustand nur punktuell auf dem Rotorblechpaket aufliegen und ein Pressdruck in unerwünschter Weise ungleich verteilt wird.

Schließlich ist es auch von Vorteil, wenn der erste Rotorhalter und/oder der zweite Rotorhalter aus einem Blech gestanzt oder geschnitten ist und lediglich der Innendurchmesser eines Presssitzes durch Drehen und/oder Schleifen bearbeitet wird. Dadurch können die Rotorhalter besonders rationell hergestellt werden.

### KURZE BESCHREIBUNG DER FIGUREN

Ausführungsbeispiele der Erfindung sind exemplarisch in den beigefügten schematischen Figuren dargestellt. Es zeigen:
- Fig. 1: eine schematisch im Halbschnitt dargestellte, beispielhafte elektrische Maschine;
- Fig. 2: ein erstes Beispiel für einen Rotor in Schrägansicht;
- Fig. 3: den ersten Rotorhalter für den Rotor aus Fig. 2 in Schrägansicht von vorne;
- Fig. 4: den zweiten Rotorhalter für den Rotor aus Fig. 2 in Schrägansicht von hinten;
- Fig. 5: eine Vorderansicht des Rotors aus Fig. 2;
- Fig. 6: ein zweites Beispiel für einen Rotor in Schrägansicht;
- Fig. 7: den ersten Rotorhalter für den Rotor aus Fig. 6 in Schrägansicht von vorne;
- Fig. 8: den zweiten Rotorhalter für den Rotor aus Fig. 6 in Schrägansicht von hinten;
- Fig. 9: eine Vorderansicht des Rotors aus Fig. 6 und
- Fig. 10: eine elektrische Maschine der vorgeschlagenen Art, welche in ein Fahrzeug eingebaut ist.

### DETAILIERTE BESCHREIBUNG DER ERFINDUNG

Einführend wird festgehalten, dass gleiche Teile in den unterschiedlich Ausführungsformen mit gleichen Bezugszeichen beziehungsweise gleichen Bauteilbezeichnungen versehen werden, gegebenenfalls mit unterschiedlichen Indizes. Die in der Beschreibung enthaltene Offenbarungen eines Bauteils kann sinngemäß ein anderes Bauteil mit gleichem Bezugszeichen beziehungsweise gleicher Bauteilbezeichnung übertragen werden. Auch sind die in der Beschreibung gewählten Lageangaben, wie zum Beispiel "oben", "unten", "hinten", "vorne", "seitlich" und so weiter auf die unmittelbar beschriebene sowie dargestellte Figur bezogen und bei einer Lageänderung sinngemäß auf die neue Lage zu übertragen.

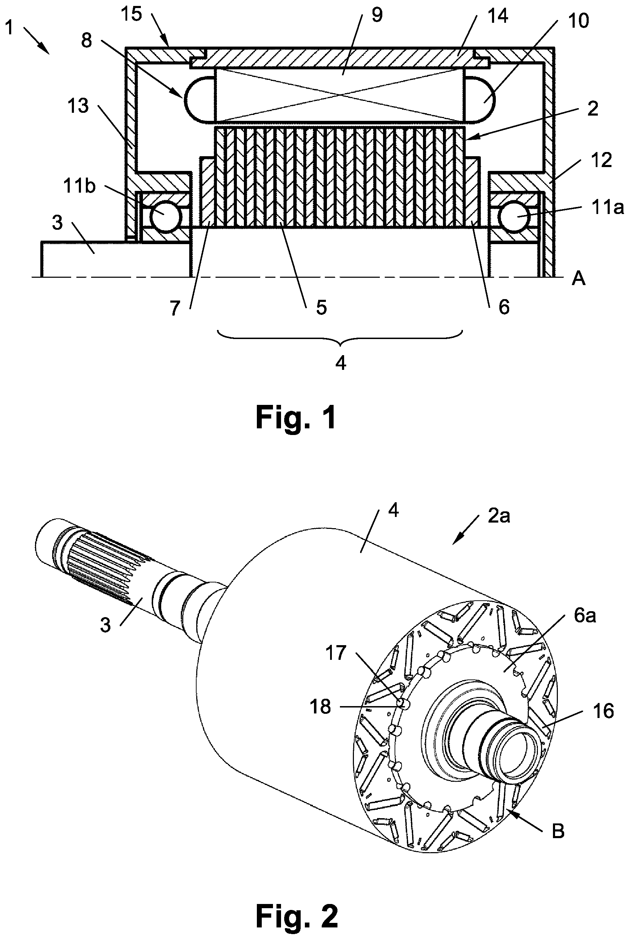

Fig. 1 zeigt einen Halbschnitt durch eine schematisch dargestellte elektrische Maschine 1. Die elektrische Maschine 1 umfasst, einen Rotor 2 mit einer Rotorwelle 3 und einem auf der Rotorwelle 3 sitzenden Rotorblechpaket 4 mit mehreren aufeinander gestapelten Rotorblechen 5. Darüber hinaus umfasst der Rotor 2 einen ersten Rotorhalter 6, welcher benachbart zum Rotorblechpaket 4 auf einer ersten Seite desselben angeordnet ist, und einen zweiten Rotorhalter 7, welcher benachbart zum Rotorblechpaket 4 auf einer zweiten, gegenüberliegenden Seite desselben angeordnet ist. Der erste Rotorhalter 6 und der zweite Rotorhalter 7 dienen der axialen Sicherung des Rotorblechpakets 4, sodass dieses im Betrieb der elektrischen Maschine 1 nicht auseinander wandern kann. Sowohl das Rotorblechpaket 4, als auch der erste Rotorhalter 6 und der zweite Rotorhalter 7 sind mit Hilfe einer Presspassung auf der Rotorwelle 3 montiert. Insbesondere ist die genannte Presspassung die alleinige axiale Sicherung des ersten Rotorhalters 6 und des zweiten Rotorhalters 7. Das heißt, es gibt in diesem Fall keine Wellensicherungsringe, Wellenmuttern oder dergleichen, welche die axiale Position des ersten Rotorhalters 6 und des zweiten Rotorhalters 7 zusätzlich sichern würden.

Die elektrische Maschine 1 umfasst weiterhin einen Stator 8 mit einem Statorblechpaket 9 mit mehreren Statorblechen auf, die in diesem Beispiel nicht im einzelnen dargestellt sind, sowie in diesen angeordnete Statorwicklungen 10. Der Rotor 2 beziehungsweise die Rotorwelle 3 ist mit Hilfe von (Wälz)lagern 11a, 11b um eine Drehachse A gegenüber dem Stator 8 drehbar gelagert. Konkret sitzt das erste Lager 11a in einem ersten Lagerschild 12 und das zweite Lager 11b in einem zweiten Lagerschild 13. Weiterhin umfasst die elektrische Maschine 1 ein (mittleres) Gehäuseteil 14, welches das erste Lagerschild 12 und das zweite Lagerschild 13 verbindet und den Stator 8 aufnimmt. Das erste Lagerschild 12, das zweite Lagerschild 13 und das Gehäuseteil 14 bilden in diesem Beispiel das Gehäuse 15 der elektrische Maschine 1.

Die Fig. 2 zeigt nun eine erste, etwas detailliertere Ausführungsform eines Rotors 2a in Schrägansicht. Der Rotor 2a weist eine Rotorwelle 3 auf, sowie ein darauf sitzendes Rotorblechpaket 4 und darauf sitzende Rotorhalter 6a, 7a, von welchen in der Fig. 2 aber nur der erste Rotorhalter 6a sichtbar ist. Zudem umfasst der Rotor 2a im Rotorblechpaket 4 angeordnete Magnete 16, sowie im Rotorblechpaket 4 angeordnete Bohrungen 17 zur Aufnahme von Wuchtgewichten.

Die Außenkontur des ersten Rotorhalters 6a ist im Wesentlichen kreiszylindrisch, jedoch umfasst dieser optionale Ausnehmungen 18 im Bereich der Bohrungen 17. Mit anderen Worten sind die Bohrungen 17 im ersten Rotorhalter 6a freigelassen. Dadurch kann der Rotor 2a in einem Zustand gewuchtet werden, in dem die Rotorhalter 6a, 7a auf der Rotorwelle 3 montiert sind.

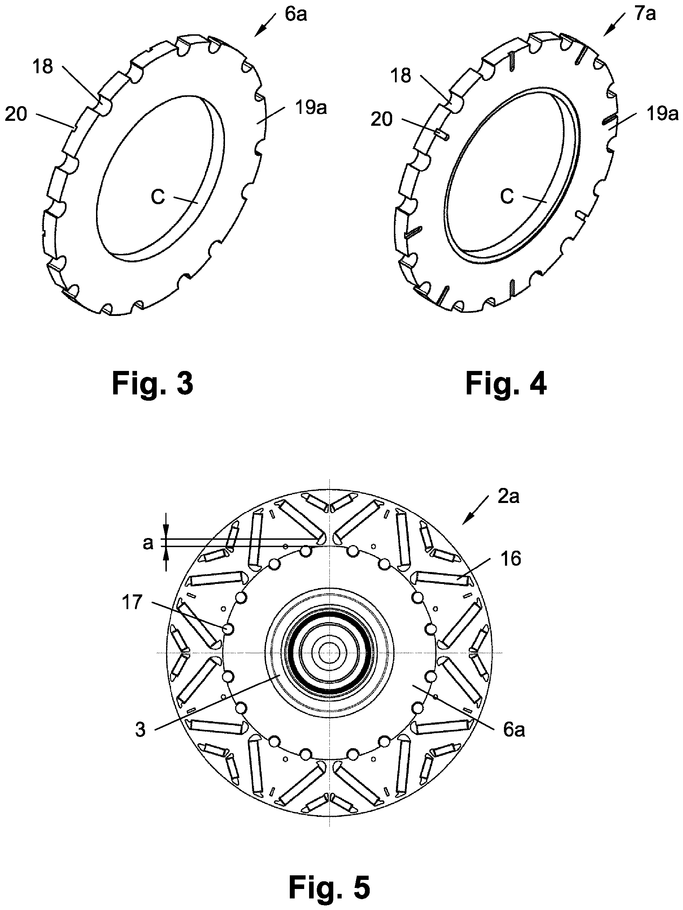

Die Fig. 3 zeigt nun eine Schrägansicht des ersten Rotorhalters 6a von vorne, und die Fig. 4 zeigt eine Schrägansicht des zweiten Rotorhalters 7a von hinten. In diesem Beispiel sind die beiden Rotorhalter 6a, 7a identisch gestaltet, weswegen die Fig. 3 und 4 auch so interpretiert werden können, dass sie die Vorder- und Rückseite eines einzigen Rotorhalters 6a, 7a zeigen. In den Fig. 3 und 4 sind daher gleiche Teile mit denselben Bezugszeichen bezeichnet. Der identische Aufbau der Rotorhalter 6a, 7a ist zwar von Vorteil, jedoch nicht zwingend, und die Rotorhalter 6a, 7a können auch unterschiedlich gestaltet sein.

Die Rotorhalter 6a, 7a umfassen einen scheibenförmigen Grundkörper 19a mit den Ausnehmungen 18 für die Bohrungen 17 und weitere optionale Freistellungen 20, die im montierten Zustand im Bereich von Verbindungsmitteln zur Ausrichtung und/oder Verbindung der Rotorbleche 5 des Rotorblechpakets 4 dienen. Beispielsweise können Laschen der Rotorbleche 5 jeweils etwas umgebogen werden, um die Rotorbleche 5 zu verbinden und auszurichten. Auch durch das Rotorblechpaket 4 verlaufende Stifte sind Beispiele für Verbindungsmittel zur Ausrichtung und/oder Verbindung der Rotorbleche 5 des Rotorblechpakets 4. Durch die Freistellungen 20 wird vermieden, dass die Rotorhalter 6a, 7a im montierten Zustand nur punktuell auf dem Rotorblechpaket 4 aufliegen und ein Pressdruck in unerwünschter Weise ungleich verteilt wird.

Der Rotor 2, 2a wird dadurch hergestellt, dass
a) die Rotorwelle 3 bereitgestellt wird,
b) das Rotorblechpaket 4 auf die Rotorwelle 3 aufgepresst wird,
c1) der erste Rotorhalter 6, 6a auf die Rotorwelle 3 benachbart zum Rotorblechpaket 4 auf einer ersten Seite desselben aufgepresst wird und
c2) der zweite Rotorhalter 7, 7a auf die Rotorwelle 3 benachbart zum Rotorblechpaket 4 auf einer zweiten, gegenüberliegenden Seite desselben aufgepresst wird.

Die Reihenfolge der Schritte c1) und c2) ist dabei von geringer Bedeutung und kann auch umgekehrt werden. Insbesondere kann der erste Rotorhalter 6, 6a und/oder der zweite Rotorhalter 7, 7a beim beziehungsweise vor dem Aufpressen auf die Rotorwelle 3 erhitzt werden.

Alternativ kann der Rotor 2, 2a hergestellt werden, indem
- die Rotorwelle 3 und das Rotorblechpaket 4 bereitgestellt werden,
- der erste Rotorhalter 6 und der zweite Rotorhalter 7a relativ zum Rotorblechpaket 4 ausgerichtet werden, sodass der erste Rotorhalter 6 an einem Ende des Rotorblechpakets 4 und der zweite Rotorhalter 7a an einem anderen Ende des Rotorblechpakets 4 anliegt,
- der erste und zweite Rotorhalter 7, 7a mit dem Rotorblechpaket 4 verspannt wird, um einen verspannten Verbund aus dem ersten Rotorhalter 6, dem zweiten Rotorhalter 6a und dem Rotorblechpaket 4 zu erhalten,
- der verspannte Verbund erhitzt wird und die Rotorwelle 3 in den erhitzten verspannten Verbund eingefügt wird, und
- Ader erhitzte verspannte Verbund mit darin eingefügter Rotorwelle 3 abgekühlt wird, um den Rotor 2, 2a zu erhalten.

Es s auch möglich, den Rotor 2, 2a folgendermaßen herzustellen:
- Bereitstellen einer gekühlten Rotorwelle 3 und eines Rotorblechpakets 4,
- Ausrichten eines ersten Rotorhalters 6 und eines zweiten Rotorhalters 6a relativ zum Rotorblechpaket 4, sodass der erste Rotorhalter 6 an einem Ende des Rotorblechpakets 4 und der zweite Rotorhalter 7a an einem anderen Ende des Rotorblechpakets 4 anliegt,
- Verspannung des ersten und zweiten Rotorhalters 7, 7a mit dem Rotorblechpaket 4, um einen verspannten Verbund aus dem ersten Rotorhalter 6, dem zweiten Rotorhalter 7a und dem Rotorblechpaket 4 zu erhalten,
- kraftloses Einfügen einer gekühlten Rotorwelle 3 in den verspannten Verbund, und
- Erwärmen des verspannten Verbundes mit darin eingefügter Rotorwelle 3, um den Rotor 2, 2a zu erhalten.

Denkbar ist auch, dass der erste Rotorhalter 6, 6a und/oder der zweite Rotorhalter 7, 7a aus einem Blech gestanzt oder geschnitten wird. Vorteilhaft ist es dabei, wenn lediglich der Innendurchmesser C eines Presssitzes durch Drehen und/oder Schleifen bearbeitet wird, der erste Rotorhalter 6, 6a und/oder der zweite Rotorhalter 7, 7a aber ansonsten nicht überdreht wird. Dadurch kann dieser besonders rationell hergestellt werden.

Fig. 5 zeigt den Rotor 2a nun in Vorderansicht. Aus dieser Ansicht ist gut zu erkennen, dass der erste Rotorhalter 6a überall von den im Rotorblechpaket 4 angeordneten Permanentmagneten 16 beabstandet ist. Vorteilhaft beträgt der Minimumabstand a zwischen dem ersten Rotorhalter 6a und den Permanentmagneten 16 a=4 mm (gemessen in der Stirnebene B normal auf die Rotationsachse A des Rotors 2a). Dasselbe gilt für den zweiten Rotorhalter 7a. Auf diese Weise wird das magnetische Feld im Rotor 2a durch die Rotorhalter 6a, 7a nicht oder nur geringfügig beeinflusst, selbst dann nicht, wenn der erste Rotorhalter 6a und/oder der zweite Rotorhalter 7a aus einem (ferromagnetischen) Vergütungsstahl gefertigt ist, um besonders hohen Belastungen standzuhalten.

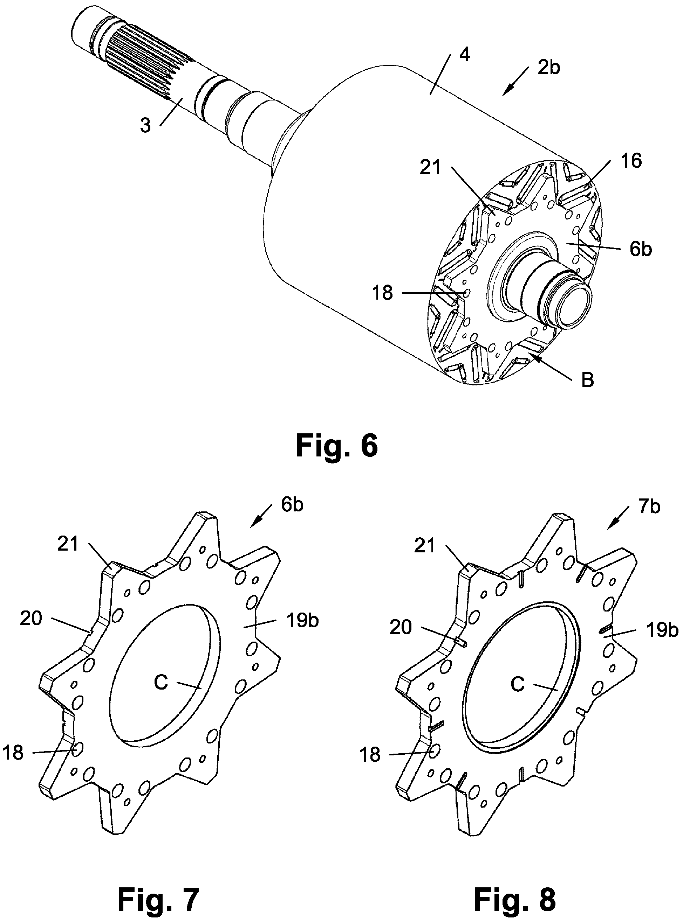

Die Fig. 6 bis 9 sind äquivalent zu den Fig. 2 bis 5, zeigen jedoch eine weitere Ausführungsform eines Rotors 2b, welche der in den Fig. 2 bis 5 dargestellten Ausführung des Rotors 2a sehr ähnlich ist. Im Unterschied zu den kreiszylindrischen Rotorhaltern 6a, 7a sind nun aber sternförmige Rotorhalter 6b, 7b vorgesehen, wobei der erste Rotorhalter 6b und/oder der zweite Rotorhalter 7b so viele Arme 21 hat wie der Rotor 2b magnetische Pole hat. Konkret sind die Arme 21 des ersten Rotorhalters 6b und/oder des zweiten Rotorhalters 7b zwischen den magnetischen Polen angeordnet. In dem in den Fig. 6 bis 9 dargestellten Beispiel weist der Rotors 2b acht magnetische Pole und demzufolge auch acht Arme 21 auf. Diese Zahl ist aber rein beispielhaft und es könnte auch mehr oder weniger als acht magnetische Pole und Arme 21 vorgesehen sein.

Die übrigen Ausführungsvarianten und daraus resultierenden Vorteile können von dem in den Fig. 2 bis 5 dargestellten Rotor 2a übernommen werden. Insbesondere betrifft dies:
- die optionalen Ausnehmungen 18 im Bereich der Bohrungen 17 für die Wuchtgewichte,
- den identischen Aufbau der Rotorhalter 6b, 7b,
- die optionalen Freistellungen 20 im Bereich von Verbindungsmitteln zur Ausrichtung und/oder Verbindung der Rotorbleche 5,
- das Herstellungsverfahren für den Rotor 2, 2a, 2b,
- die Materialwahl für die Rotorhalter 6b, 7b und
- die Beabstandung der Rotorhalter 6b, 7b von den Permanentmagneten 16.

An dieser Stelle wird angemerkt, dass es zwar von Vorteil ist, wenn beide Rotorhalter 6, 7, 6a, 7a, 6b, 7b mit Hilfe einer Presspassung auf der Rotorwelle 3 montiert sind, es aber auch möglich ist, dass einer der beiden Rotorhalter 6, 7, 6a, 7a, 6b, 7b axial anders gesichert ist, beispielsweise durch eine Wellenschulter auf der Rotorwelle 3 oder einen Wellensicherungsring.

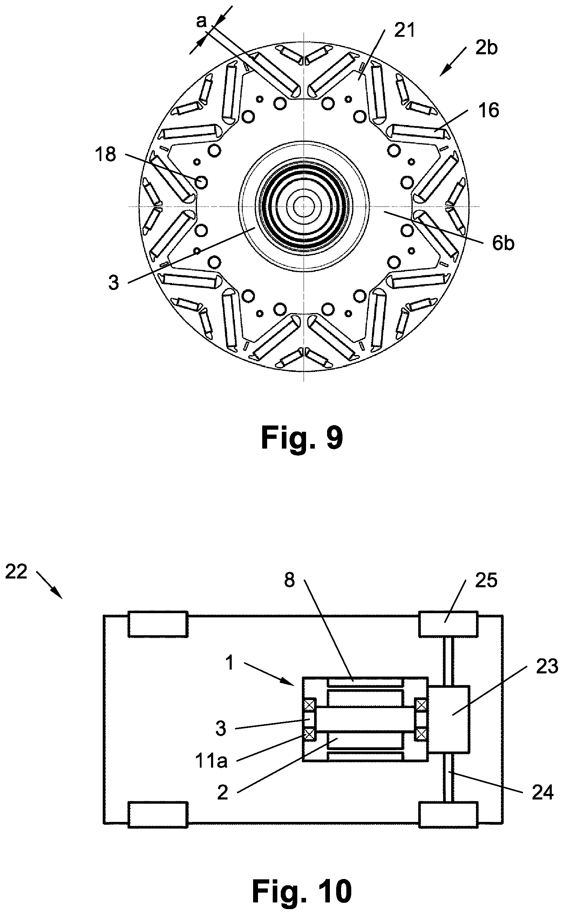

Die Fig. 10 zeigt schließlich die in ein Fahrzeug 22 eingebaute elektrische Maschine 1. Das Fahrzeug 22 weist wenigstens zwei Achsen auf, von denen wenigstens eine angetrieben ist. Konkret ist die elektrische Maschine 1 über ein optionales Getriebe 23 mit den Halbachsen 24 der Hinterachse verbunden. An den Halbachsen 24 sind schließlich die angetriebenen Räder 25 montiert. Der Antrieb des Fahrzeugs 22 erfolgt zumindest teilweise oder zeitweise durch die elektrische Maschine 1. Das heißt, die elektrische Maschine 1 kann zum alleinigen Antrieb des Fahrzeugs 22 dienen oder zum Beispiel im Verbund mit einer Verbrennungskraftmaschine vorgesehen sein (Hybridantrieb).

Abschließend wird festgehalten, dass der Schutzbereich durch die Patentansprüche bestimmt ist. Die Beschreibung und die Zeichnungen sind jedoch zur Auslegung der Ansprüche heranzuziehen. Die in den Figuren enthaltenen Merkmale können beliebig ausgetauscht und miteinander kombiniert werden. Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

## Patentansprüche

1. Rotor (2, 2a, 2b) für eine elektrische Maschine (1), umfassend
- eine Rotorwelle (3),
- ein Rotorblechpaket (4), das mit einer Presspassung auf der Rotorwelle (3) sitzt,
- einen ersten Rotorhalter (6, 6a, 6b), welcher benachbart zum Rotorblechpaket (4) auf einer ersten Seite desselben angeordnet ist, und einen zweiten Rotorhalter (7, 7a, 7b), welcher benachbart zum Rotorblechpaket (4) auf einer zweiten, gegenüberliegenden Seite desselben angeordnet ist, wobei der erste Rotorhalter (6, 6a, 6b) und/oder der zweiten Rotorhalter (7, 7a, 7b) mit Hilfe einer Presspassung auf der Rotorwelle (3) montiert ist.

2. Rotor (2, 2a, 2b) nach Anspruch 1, **dadurch gekennzeichnet, dass** der erste Rotorhalter (6, 6a, 6b) und/oder der zweite Rotorhalter (7, 7a, 7b) aus einem Vergütungsstahl gefertigt ist.

3. Rotor (2, 2a, 2b) nach Anspruch 1 oder 2, **dadurch gekennzeichnet, dass** die Außenkontur des ersten Rotorhalters (6, 6a, 6b) und/oder des zweiten Rotorhalters (7, 7a, 7b)
i) kreiszylindrisch ist oder
ii) sternförmig ist, wobei der erste Rotorhalter (6, 6a, 6b) und/oder der zweite Rotorhalter (7, 7a, 7b) so viele Arme (21) hat wie der Rotor (2, 2a, 2b) magnetische Pole und die Arme (21) des ersten Rotorhalters (6, 6a, 6b) und/oder des zweiten Rotorhalters (7, 7a, 7b) zwischen den magnetischen Polen angeordnet sind.

4. Rotor (2, 2a, 2b) nach einem der Ansprüche 1 bis 3, **dadurch gekennzeichnet, dass** der Minimumabstand (a) zwischen dem ersten Rotorhalter (6, 6a, 6b) und im Rotorblechpaket (4) angeordneten Permanentmagneten (16) und/oder der Minimumabstand (a) zwischen dem zweiten Rotorhalter (7, 7a, 7b) und im Rotorblechpaket (4) angeordneten Permanentmagneten (16) 4 mm beträgt.

5. Rotor (2, 2a, 2b) nach einem der Ansprüche 1 bis 4, **dadurch gekennzeichnet, dass** im Rotorblechpaket (5) angeordnete Bohrungen, von denen einige mit Wuchtgewichten besetzt sind, im ersten Rotorhalter (6, 6a, 6b) und/oder im zweiten Rotorhalter (7, 7a, 7b) freigelassen sind.

6. Rotor (2, 2a, 2b) nach einem der Ansprüche 1 bis 5, **dadurch gekennzeichnet, dass** der erste Rotorhalter (6, 6a, 6b) und/oder der zweiten Rotorhalter (7, 7a, 7b) im Bereich eines Verbindungsmittels zur Ausrichtung und/oder Verbindung von Rotorblechen (5) des Rotorblechpaktes (4) freigestellt ist.

7. Verfahren zur Herstellung eines Rotors (2, 2a, 2b) für eine elektrische Maschine (1), umfassend die Schritte
a) Bereitstellen einer Rotorwelle (3),
b) Aufpressen eines Rotorblechpakets (4) auf die Rotorwelle (3),
c1) Aufpressen eines ersten Rotorhalters (6, 6a, 6b) auf die Rotorwelle (3) benachbart zum Rotorblechpaket (4) auf einer ersten Seite desselben und/oder
c2) Aufpressen eines zweiten Rotorhalters (7, 7a, 7b) auf die Rotorwelle (3) benachbart zum Rotorblechpaket (4) auf einer zweiten, gegenüberliegenden Seite desselben.

8. Verfahren zur Herstellung eines Rotors (2, 2a, 2b) für eine elektrische Maschine (1), aufweisend folgende Verfahrensschritte:
- Bereitstellen einer Rotorwelle (3) und eines Rotorblechpakets (4),
- Ausrichten eines ersten Rotorhalters (6) und eines zweiten Rotorhalters (7a) relativ zum Rotorblechpaket (4), sodass der erste Rotorhalter (6) an einem Ende des Rotorblechpakets (4) und der zweite Rotorhalter (7a) an einem anderen Ende des Rotorblechpakets (4) anliegt,
- Verspannung des ersten und zweiten Rotorhalters (7, 7a) mit dem Rotorblechpaket (4), um einen verspannten Verbund aus dem ersten Rotorhalter (6), dem zweiten Rotorhalter (6a) und dem Rotorblechpaket (4) zu erhalten,
- Erhitzen des verspannten Verbundes und kraftloses Einfügen der Rotorwelle (3) in den erhitzten verspannten Verbund, und
- Abkühlen lassen des erhitzten verspannten Verbundes mit darin eingefügter Rotorwelle (3), um den Rotor (2, 2a, 2b) zu erhalten.

9. Verfahren zur Herstellung eines Rotors (2, 2a, 2b) für eine elektrische Maschine (1), aufweisend folgende Verfahrensschritte:
- Bereitstellen einer gekühlten Rotorwelle (3) und eines Rotorblechpakets (4),
- Ausrichten eines ersten Rotorhalters (6) und eines zweiten Rotorhalters (6a) relativ zum Rotorblechpaket (4), sodass der erste Rotorhalter (6) an einem Ende des Rotorblechpakets (4) und der zweite Rotorhalter (7a) an einem anderen Ende des Rotorblechpakets (4) anliegt,
- Verspannung des ersten und zweiten Rotorhalters (7, 7a) mit dem Rotorblechpaket (4), um einen verspannten Verbund aus dem ersten Rotorhalter (6), dem zweiten Rotorhalter (7a) und dem Rotorblechpaket (4) zu erhalten,
- kraftloses Einfügen der gekühlten Rotorwelle (3) in den verspannten Verbund, und
- Erwärmen des verspannten Verbundes mit darin eingefügter Rotorwelle (3), um den Rotor (2, 2a, 2b) zu erhalten.

10. Verfahren nach einem der Ansprüche 7 bis 9, **dadurch gekennzeichnet, dass** der erste Rotorhalter (6, 6a, 6b) und/oder der zweite Rotorhalter (7, 7a, 7b) aus einem Blech gestanzt oder geschnitten ist und lediglich der Innendurchmesser eines Presssitzes (C) durch Drehen und/oder Schleifen bearbeitet wird.

11. Elektrische Maschine, aufweisend einen und einen Rotor (2, 2a, 2b) nach einem der Ansprüche 1 bis 6 oder einem Rotor (2, 2a, 2b), der mit einem Verfahren nach einem der Ansprüche 7 bis 11 hergestellt ist, der gegenüber dem Stator (8) um die Rotationsachse (A) des Rotors (2, 2a, 2b) drehbar gelagert ist.

12. Fahrzeug (22) mit wenigstens zwei Achsen, von denen wenigstens eine angetrieben ist, **dadurch gekennzeichnet, dass** der besagte Antrieb zumindest teilweise oder zeitweise durch die elektrische Maschine (1) nach Anspruch 11 erfolgt.
